Europäisches Patentamt

European Patent Office

Office européen des brevets

(11) Publication number: **0 686 678 A1**

# EUROPEAN PATENT APPLICATION

(21) Application number: **95107594.4**

(22) Date of filing: **18.05.95**

(51) Int. Cl.⁶: **C09D 167/02**

(30) Priority: **06.06.94 EP 94870092**

(43) Date of publication of application:
**13.12.95 Bulletin 95/50**

(84) Designated Contracting States:
**AT BE CH DE DK ES FR GB GR IE IT LI LU NL PT SE**

(71) Applicant: **FINA RESEARCH S.A.**
**Zone Industrielle C**
**B-7181 Seneffe (Feluy) (BE)**

(72) Inventor: **Pigeolet, Philippe**
**Rue Haute, 95**
**B-1435 Corbais (BE)**
Inventor: **Vranken, Paul**
**Rue serge Ecksteinlaan, 25**
**B-1731 Zellik (BE)**
Inventor: **Van Severen, Marc**
**Rue des Tulipes, 8**
**B-7850 Enghien (BE)**

(54) **Coil coating compositions for high thickness coatings**

(57) The polyester-melamine compositions of the invention consist essentially of a polyester resin having an acid number close to zero, an hydroxyl number of 35-100 and a viscosity of 15-30 dPa.s, a cross-linking component selected from melamine and urea-formaldehyde resins, a catalyst, pigments, solvents and at least three additives comprising
  (i) at least one wax,
  (ii) at least one polysiloxane, and
  (iii) at least one polyacrylate.
The compositions can be applied to give films of thickness 0.04 to 0.055 mm when cured. They are applied on metal coils, optionally coated with a primer, at a speed of 100-200 m/min, and cured in an oven.

The present invention relates to coil coating compositions. More particularly it relates to polyester-melamine coil coating compositions. It also relates to the use of the compositions to apply high thickness coatings on coil.

Polyester-melamine coil coating compositions are well-known in the art.

EP-257144-A discloses a coil composition consisting essentially of a mixture of a linear polyester and a branched polyester with a crosslinking component which may be a melamine resin.

EP-288964-A discloses polyester-melamine coil coating compositions especially for domestic appliances. In the primer, the polyester is obtained from dicarboxylic acid/anhydride and (cyclo)aliphatic diol, while in the topcoat it is obtained from an aromatic dicarboxylic acid and (cyclo)aliphatic diol. Film thicknesses are up to 0.025 mm for the primer and 0.010-0.023 mm for the topcoat.

US-4520188-A discloses linear polyester compositions for coil coating, said polyester being more readily soluble in organic solvents and resisting crystallisation during storage of the coil coating composition.

However, the film thicknesses were in fact limited to about 0.03 mm per layer. By contrast, powder coatings enable to obtain layers of about 0.05 mm. The advantage of coil coating lies in the high speed of application (typically 100 to 180 m/min) while powder coating lines have limited speeds (typically 40 m/min). Further, the use of modern coil coating lines equipped with solvent recovery and burning means that the use of solvents is no longer a problem. There is thus a demand for polyester-melamine compositions which may be used in coil coating lines to obtain high thickness layers. High thickness layers, as used herein, are layers having a dry thickness of at least 0.04 mm, preferably at least 0.045 mm, up to 0.055 mm, preferably up to 0.05 mm.

An object of the present invention is therefore to provide a polyester-melamine composition which may be used in coil coating lines to obtain high thickness layers.

Another object of the invention is to provide for the use of certain polyester-melamine compositions in coil coating lines to obtain high thickness layers.

As a result of extensive studies, the inventors have unexpectedly found that by using at least a combination of additives consisting of

(i) at least one wax,

(ii) at least one polysiloxane,

(iii) at least one polyacrylate,

a polyester-melamine coating composition could be obtained which may be used in coil coating lines to obtain high thickness layers.

There is thus provided according to the invention a coating composition for use in coil coating lines to obtain a high thickness layer consisting essentially of :

(a) at least one polyester resin, essentially linear and prepared from one or more dibasic acids and one or more diols, having an acid number close to 0, an hydroxyl number of from 35 to 100, and a viscosity of from 15 to 30 dPa.s;

(b) at least one cross-linking component selected from melamine resins, urea-formaldehyde resins and their mixtures, in a weight ratio (b):(a) of from 10:90 to 20:80;

(c) at least one cross-linking catalyst;

(d) at least one pigment, in a weight ratio (d): (a + b) of from 3:10 to 12:10;

(e) at least three additives comprising

(i) at least one wax, in an amount of from 0.5 to 2.5 wt%,

(ii) at least one polysiloxane, in an amount of from 0.1 to 1 wt%, and

(iii) at least one polyacrylate, in an amount of from 0.1 to 1 wt%, the percentages being relative to the total composition; and

(f) at least one solvent.

There is also provided for the use of said compositions in a coil coating line operating at a substrate speed of 100 to 200 m/min.

There is further provided a process for applying on a coil a film of 0.04 to 0.055 mm thickness when cured, characterised in that it comprises at least the steps of :

(i) providing a metal coil, optionally pretreated and/or coated with a layer of primer,

(ii) moving said metal coil at a speed of 100 to 200 m/min,

(iii) applying a coating composition according to the invention as a thick layer on said metal coil,

(iv) curing said composition by cross-linking at a peak metal temperature of from 220 to 280°C.

The polyester resin used in the invention is an essentially linear polyester; as used herein, the term "essentially linear" means the result of the use of less than 2% branched monomers, preferably less than 0.5%. Said polyester is essentially prepared from one or more dibasic acids, preferably selected from cycloaliphatic and/or aromatic acids, and one or more diols, preferably selected from aliphatic and/or cycloaliphatic diols. Preferred acids are cyclohexane 1,4-dicarboxylic acid, isophthalic acid and their mixtures. Preferred diols are ethylene glycol, neopentyl glycol, neopentylglycol hydroxypivalate and their mixtures. Raw materials selection and reactant amounts calculation as a function of desired properties is known in the art (see e.g. vol. III, pp. 81 ff. in A Manual of Resins for Surface Coatings, M.J. Husbands et al, SITA, London, 1987).

The polyester resin should have an acid number close to 0, preferably less than 2, an hydroxyl number of from 35 to 100, preferably 50 to 85, most preferably about 70, and a viscosity of from 15 to 30 dPa.s, preferably about 22 dPa.s (measured at 25°C in 70 wt% solution in Solvesso$^{tm}$ 150 solvent using an Emila rotary viscosimeter according to DIN-53018 standard method). As known in the art, the number average molecular weight of a linear difunctional polyester can be calculated using the formula 56100 x 2 / (acid number + hydroxyl number).

The cross-linking component (or hardener) used in the invention is selected from melamine resins (which are preferred), urea-formaldehyde resins and their mixtures. Those resins are well-known in the art and need not be described here (see e.g. Ch. 9 in vol. I of Surface Coatings, OCCA, Chapman and Hall, London, 1983). The preferred resins are hexamethoxymethylmelamine (HMMM) resins, most preferably those having an average of 1.5 to 1.9 triazine units per molecule; a very low free methylol content is desirable. The hardener:polyester weight ratio is of 10:90 to 20:80, preferably 13:87 to 15:85.

As known in the art, an appropriate cross-linking catalyst must be used, in an amount which must be sufficient to provide for complete reation during the short heating time of coil coating processes. Blocked catalysts are preferably used, to prevent possible unstability of the paint and/or interactions with pigments/fillers; the minimum cure temperature of blocked catalysts is preferably between 50 and 150°C, most preferably between 60 and 80°C. Blocked sulfonic acids are preferred; as examples thereof, there may be cited blocked para-toluenesulfonic acid, often used in an amount of 2 to 7 (preferably about 3) parts by weight (pbw) per 100 pbw of cross-linking component, blocked dinonylnaphthalene disulfonic acid, dinonylnaphthalene monosulfonic acid and blocked dodecylbenzene sulfonic acid.

The pigments that may be used in coil coating compositions are well known in the art. They should be used in an amount such that the weight ratio of the pigment to the sum of the binder and the cross-linking component is of from 3:10 to 12:10, preferably 4:10 to 9:10, most preferably 5:10 to 7:10. Pigments as used herein also comprise fillers.

Usual solvents are also used, generally in an amount of 20 to 40 wt% of the total composition, preferably 25 to 35 wt%, most preferably about 30 wt%. The nature of the solvent is selected to have a good solvent power towards the polyester resin, the cross-linking component and the catalyst; a hydrocarbon solvent is generally used. The boiling range of the solvent must be suitable for the coil coating process; a boiling temperature or range between 120 and 220°C, preferably 150 to 200°C, is generally used.

The above components are however not sufficient to form a coil coating composition enabling to obtain high thickness coatings of acceptable quality : there must in addition be used at least a specific combination of additives, consisting of :

- at least one wax,
- at least one polysiloxane, and
- at least one polyacrylate.

Wax-type additives are well-known in the art and need not be described. They are generally used as lubricant additive and/or to increase abrasion resistance and surface hardness. The preferred waxes have a melting point of 90 to 120°C, most preferably of about 105°C. Wax is added in an amount of from 0.5 to 2.5 wt%, preferably 1 to 2 wt%, most preferably about 1.5 wt%

Polysiloxanes are also well-known in the art. They are generally used as surfactant and/or anti-foaming agent. The preferred polysiloxanes are methylalkyl and polyether-modified dimethyl polysiloxanes. Polysiloxane is added in an amount of from 0.1 to 1 wt%, preferably about 0.5 wt%.

Further well-known are polyacrylates. They are generally used as levelling and anti-cratering agents. The preferred polyacrylate is polyisobutylacrylate. Preferred characteristics are a viscosity of from 40 to 60 dPa.s (preferably about 50 dPa.s) at 23°C and an acid value below 10. Polyacrylate is added in an amount of from 0.1 to 1 wt%, preferably about 0.4 wt%

The fact that the above combination of additives is essential to the invention does not exclude the possibility of using other usual additives. For example, it is usual to add one or more wetting and dispersing additive for pigments (to improve pigment wetting and to prevent a re-flocculation of pigments) and/or polytetrafluoroethylene powder (to impart lubricity/slip) and/or anti-settling agent (e.g. $SiO_2$ ultrafine powder having a high specific surface area).

The coating composition can then be spread as a thick layer on a metal coil substrate, e.g. steel, galvanised steel, copper or aluminium, to provide when cured a film thickness of 0.04 to 0.055 mm. The coating is cured by cross-linking, typically at a peak metal temperature (PMT) of from 220 to 280°C. There is usually applied first and cured a primer layer of dry thickness between 0.002 and 0.030 mm, e.g. of the epoxy, polyester, polyurethane or polyesterurethane type. The substrate speed is usually in the range of 100 to 200 m/min, most usually of about 120 m/min.

The invention will now be illustrated by the following examples.

**Examples 1 and 2** The following paint composition was prepared :

```
                                         13.14 wt% ethylene glycol

                                         12.13 wt% neopentyl glycol

                   - properties :

                       - hydroxyl number : 68

                       - acid number      :  1

                       - viscosity        : 22 dPa.s

                 - HMMM resin        :

                       - degree of polymerisation : 1.7 triazine/molecule

                       - very low free methylol content

                 - blocked para-toluenesulfonic acid :

                       - minimum cure temperature : 65°C

                 - titanium dioxide pigment :

                 - wax additives :

                       - of which 0.075 parts have a melting point of abo
                         of 104-110°C

                 - polysiloxane additives :

                       - 0.2 pbw of polyether-modified di-methylpolysilox
                       - 0.25 pbw of methylalkylpolysiloxane

                 - polyacrylate additive :

                       - polyisobutylacrylate

                         - properties :

                             - acid number : max. 5

                             - viscosity (23°C) : 47 dPa.s

                 - solvents :
                   of which



         - polytetrafluoroethylene powder (average 0.005 mm) :          0.15 pbw
```

Accordingly, the polyester:melamine weight ratio was of 87:13, the pigment: (binder + hardener) weight ratio was of 0.605 and the amount of catalyst was of 2.7 wt% of the amount of melamine resin.

The paint was applied using a coil coating line at 100 m/min and cured by passing in an oven at a PMT of 245°C, to give a layer of 0.05 mm dry thickness.

The substrates were :
- in example 1 : 0.6 mm hot dip galvanised steel (HDG), with Bonder 1300 pre-treatment;
- in example 2 : 0.7 mm HDG, with Granodine C108 pre-treatment.
A polyurethane layer (0.005 mm dry thickness) was first applied on the substrates and cured.

The properties of the coated coils were evaluated as follows :

1. Erichsen stamping resistance : the plate is progressively stamped using a 20 mm diameter ball pressing from the uncoated side (i) up to 8 mm diameter and (ii) up to metal failure; cracking of the coating is evaluated visually and using a 10x magnifying lens, and adherence is evaluated using TESA 4104 adhesive tape (TESA is a trademark of BDF-Beiersdorf) :
   - notation 10 : no cracking, no adhesion failure;
   - notation 9 : cracking invisible with naked eyes, no adhesion failure;
   - notation 8 : slight crackings visible withe naked eyes, no adhesion failure
   - notation 7 : large crackings, no adhesion failure

2. zero T adherence : the plate is bent back upon itself so that no space remains between the bent layers of substrate, and the bent film is evaluated according to the above notation;

3. intercoat adhesion : the coating is scraped using a coin, and the adherence on the primer is evaluated using the subjective notations 0 (bad), 5 (average) or 10 (good);

4. adhesion on cut edges : the coated coil is cut and the adherence is evaluated as in the preceding test;

5. shock resistance : the standard method ECCA-T5 is used, then the adherence and cracking are evaluated according to the notation under 1;

6. flexibility : the standard method ECCA-T8 is used.

The results were as follows :

|  |  | example 1 | example 2 |
|---|---|---|---|
| 1. Erichsen | (i) 8 mm | 10 | 10 |
|  | (ii) metal failure | 9 | 10 |
| 2. Zero T adhesion | | 8 | 10 |
| 3. Intercoat adhesion | | 10 | 10 |
| 4. Cut edge adhesion | | 10 | 10 |
| 5. Shock resistance | | 8 | 10 |
| 6. Flexibility | | 1 T | 0 T |

For both examples, the gloss (measured at 60° according to ECCA-T2 standard method) was of 85%.

## Example 3 and comparative examples A to D:

The following paint composition was prepared, using the same components as in examples 1 and 2 :
- polyester binder : 36.47 pbw
- HMMM resin : 5.50 pbw
- blocked para-toluenesulfonic acid : 0.15 pbw
- titanium dioxide pigment : 25.40 pbw
- wax (melting point 100°C) : [W1]
- wax (melting point 104-110°C) : [W2]
- polyether-modified di-methylpolysiloxane : [S1]
- methylalkylpolysiloxane : [S2]
- polyacrylate additive : [A]
- solvents : 30.405 pbw
- pigment wetting and dispersing additive : 0.375 pbw
- ultrafine silicon dioxide powder : 0.5 pbw
- polytetrafluoroethylene powder : 0.15 pbw

The following combinations of additives were tested (data relating to examples 1 and 2 are repeated here for convenience) :

5

| | Examples 1&2 | Example 3 | Comp.A | Comp.B | Comp.C | Comp.D |
|---|---|---|---|---|---|---|
| [W1] | 0.075 | 0.075 | 0.075 | 0.075 | 0.075 | 0 |
| [W2] | 0.15 | 0 | 0.15 | 0 | 0.15 | 0 |
| [S1] | 0.2 | 0.2 | 0.2 | 0.2 | 0 | 0.2 |
| [S2] | 0.25 | 0.25 | 0.25 | 0.25 | 0 | 0.25 |
| [A] | 0.375 | 0.375 | 0 | 0 | 0.375 | 0.375 |

In example 3, the coating surface was satisfactory, as were the properties. In all comparative examples, the phenomenon named "popping" in the art of coil coating was observed, namely that the surface appearance was deteriorated by the escape of the solvent during oven curing.

**Claims**

1. Coating composition for use in coil coating lines to obtain a high thickness layer, consisting essentially of :

   (a) at least one polyester resin, essentially linear and prepared from one or more dibasic acids and one or more diols, having an acid number close to 0, an hydroxyl number of from 35 to 100, and a viscosity of from 15 to 30 dPa.s;

   (b) at least one cross-linking component selected from melamine resins, urea-formaldehyde resins and their mixtures, in a weight ratio (b):(a) of from 10:90 to 20:80;

   (c) at least one cross-linking catalyst;

   (d) at least one pigment, in a weight ratio (d):(a + b) of from 3:10 to 12:10;

   (e) at least three additives comprising

      (i) at least one wax, in an amount of from 0.5 to 2.5 wt%,

      (ii) at least one polysiloxane, in an amount of from 0.1 to 1 wt%, and

      (iii) at least one polyacrylate, in an amount of from 0.1 to 1 wt%, the percentages being relative to the total composition; and

   (f) at least one solvent.

2. Composition according to claim 1, wherein

   (a) said polyester resins are linear and prepared from one or more cycloaliphatic and/or aromatic acids and one or more aliphatic and/or cycloaliphatic diols, having an acid number smaller than 2, an hydroxyl number of from 50 to 85, and a viscosity of about 22 dPa.s;

   (b) said cross-linking components are in a weight ratio (b):(a) of from 13:87 to 15:85;

   (c) said cross-linking catalysts are blocked para-toluenesulfonic acid having a minimum cure temperature between 50 and 150°C, used in an amount of 2 to 7 parts by weight (pbw) per 100 pbw of (b);

   (d) said pigments are in a weight ratio (d):(a + b) of from 4:10 to 9:10;

   (e) said additives comprise

      (i) at least one wax having a melting point of 90 to 120°C, in an amount of from 1 to 2 wt%,

      (ii) at least one polysiloxane being methylalkyl and/or polyester-modified dimethyl polysiloxanes, in an amount of about 0.5 wt%, and

      (iii) at least one polyacrylate having a viscosity of 40 to 60 dPa.s at 23°C and an acid value below 10, in an amount of about 0.4 wt%,and

   (f) said solvents are used in an amount of 25 to 35 wt% of the total composition.

3. Composition according to claim 2, wherein

   (a) said polyester resins are linear and prepared from cyclohexane 1,4-dicarboxylic acid, isophthalic acid and their mixtures, and from ethylene glycol, neopentyl glycol, neopentylglycol hydroxypivalate and their mixtures, having an hydroxyl number of about 70;

   (b) said cross-linking components are hexamethoxymethylmelamine resins having an average of 1.5 to 1.9 triazine units per molecule;

   (c) said cross-linking catalysts are blocked para-toluenesulfonic acid having a minimum cure temperature between 60 and 80°C, used in an amount of about 3 parts by weight (pbw) per 100 pbw of (b);

   (d) said pigments are in a weight ratio (d):(a + b) of from 5:10 to 7:10;

   (e) said additives comprise

(i) at least one wax having a melting point of about 105°C, in an amount of about 1.5 wt%, and

(ii) at least two polysiloxanes being methylalkyl and polyether-modified dimethyl polysiloxanes, in a total amount of about 0.5 wt%, and

(iii) at least one polyacrylate having a viscosity of about 50 dPa.s at 23°C, and

(f) said solvents are used in an amount of about 30 wt%.

4. Use of the composition according to any one of claims 1 to 3 in a coil coating line operating at a substrate speed of 100 to 200 m/min.

5. Use according to claim 4 to provide when cured a film thickness of 0.04 to 0.055 mm.

6. Use according to claim 5 to provide when cured a film thickness of 0.045 to 0.05 mm.

7. Process for applying on a coil a film of 0.04 to 0.055 mm thickness when cured, characterised in that it comprises at least the steps of :

(i) providing a metal coil, optionally pretreated and/or coated with a layer of primer,

(ii) moving said metal coil at a speed of 100 to 200 m/min,

(iii) applying a coating composition according to any one of claims 1 to 3 as a thick layer on said metal coil,

(iv) curing said composition by cross-linking at a peak metal temperature of from 220 to 280°C.

| | European Patent Office | EUROPEAN SEARCH REPORT | Application Number EP 95 10 7594 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE-A-39 42 565 (BASF LACKE + FARBEN AG) * page 6, line 14 - line 20; claims 1-9 * ----- | 1-4 | C09D167/02 |
| | | | |
| | | | TECHNICAL FIELDS SEARCHED (Int.Cl.6) |
| | | | C09D |

The present search report has been drawn up for all claims

| Place of search | Date of completion of the search | Examiner |
|---|---|---|
| THE HAGUE | 2 October 1995 | Decocker, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)